# EUROPEAN PATENT SPECIFICATION

(11) **EP 3 416 819 B1**
(45) Date of publication and mention of the grant of the patent: **04.11.2020**
(21) Application number: 17714015.9
(22) Date of filing: 14.02.2017
(51) Int. Cl.: B29D 35/00, B29D 35/12, B29D 35/14, A43B 1/12, C08J 9/33, B29C 43/00, B29C 44/02

(54) **A METHOD OF MOULDING AN OBJECT IN POLYURETHANE, IN PARTICULAR A SOLE FOR FOOTWEAR, OBTAINED FROM POLYURETHANE SCRAPS, AND MOULDED OBJECT IN POLYURETHANE THEREOF**
VERFAHREN ZUR FORMUNG EINES OBJEKTS IN POLYURETHAN, INSBESONDERE EINER SOHLE FÜR SCHUHWERK, ERHALTEN AUS POLYURETHANABFÄLLEN, UND FORMOBJEKTS IN POLYURETHAN DAVON
PROCÉDÉ DE MOULAGE D'UN OBJET EN POLYURÉTHANE, NOTAMMENT UNE SEMELLE DE CHAUSSURE, OBTENU À PARTIR DE DÉCHETS DE POLYURÉTHANE, ET OBJET MOULÉ EN POLYURÉTHANE À PARTIR DE CE DERNIER

(30) Priority: 15.02.2016 IT UB20160726
(43) Date of publication of application: 26.12.2018
(73) Proprietor: EUROSUOLE S.P.A., 62012 Civitanova Marche MC (IT)
(72) Inventor: PAGLIALUNGA, Daniele, I-62012 Civitanova Marche (Macerata) (IT); RUFFINI, Giorgio, I-62012 Civitanova Marche (Macerata) (IT); ERCOLI, Rosaria, I-62012 Civitanova Marche (Macerata) (IT); ERCOLI, Germano, I-62012 Civitanova Marche (Macerata) (IT)
(74) Representative: Mitola, Marco
(86) International application number: PCT/IB2017/050814
(87) International publication number: WO 2017/141160

(56) References cited:
- WO-A1-2004/052608
- WATERMAN AND PHILLIPS: "The Mechanical Properties of High-Density Rigid Polyurethane Foams in Compression: II. Yield Behaviour", POLYMER ENGINEERING AND SCIENCE, vol. 14, no. 1, 1 January 1974 (1974-01-01), pages 72-75, XP002758448,

## Description

### FIELD OF APPLICATION

The present invention relates to a method of moulding an object in polyurethane, in particular a sole for footwear, obtained from polyurethane scraps, and a moulded object in polyurethane, such as a sole for footwear.

### PRIOR ART

As is well known, in recent years there is increasing consumer and market awareness to the issue of green economy, i.e. an economy that in addition to the goal of profit also supports the search for processes aimed to lower the impact on the external environment, protecting the environment in every possible form (energy, mining, ecological), making it sustainable. A theme strongly felt in art is that of the recovery of production waste.

In particular, in the field of soles for footwear, there are various operations under investigation or already implemented for the reuse of waste materials avoiding disposal thereof, in a manner dependent on the individual materials used as main components and/or accessories (vulcanised rubber, TPR, TPU, EVA, PVC, PC, ABS, PU). The particular industry to which the present invention is directed is that of polyurethane foam, widely used in footwear.

The production of this type of sole employs a polymer (reaction product of two components called isocyanate and polyol) whose cross-linked (i.e. vulcanised) nature prevents the reuse of production waste, either they are by-products (burrs, drain pre-casting for colour change) or non-compliant finished parts. Therefore, it is not possible to grind the waste for reuse in small size with the raw material, as is the case with thermoplastic polymers.

In the field of polyurethane foam, therefore, there are primarily two ways of implementing the reuse of waste materials: glycolysis and agglomeration.

Glycolysis is the reaction between ground polyurethane and propylene (MonoEthyleneGlycol, DiEthyleneGlycol, or low molecular weight hydroxylated resins) which, under the action of heat and stirring, leads to a liquid product of low molecular weight which preserves hydroxyl functions. This product can be mixed in shearing with raw polyol and undergo a new polymerization reaction.

Agglomeration uses shredded waste of polyurethane of flexible foams that are mixed with raw polyurethane, which by foaming incorporates them at its interior.

A third way is shredded waste agglomeration with the addition of a binder which acts as a glue where, inside a mould by the action of heat, the granules adhere to each other to produce a single piece.

### DISCLOSURE OF THE INVENTION

The above known techniques have drawbacks and limitations.

In particular, the waste recovery technique by glycolysis includes a preliminary process which is obtaining the glycolized polyurethane, which requires a reactor in which the granules and glycol must react at high temperature for many hours. The result is a highly viscous liquid, with low technical characteristics due to the high diversity of components, which can be directly inserted into the polyol part only, in that are more technically disadvantageous as they are higher. Therefore, the final product will have a percentage of recovered on the finished product that, in the best case, does not reach 50%.

Considering the cost and complexity of the preliminary preparation reaction of the glycolized and the concentration limit on the total, such waste recovery method is not satisfactory from the point of view of both the commercial value and the ecological impact.

In the agglomeration technique of soles ground with raw polyurethane, an ISOCYANATE/POLYOL mixer should be arranged which provides for the introduction of this third component. The balance to be respected for the agglomeration to be moulded does not exceed concentrations of granules on the finished product of more than 20-30%, since these hinder the flow of material inside the mould, producing filling defects with respect to the original shape of the mould. Of course, the above percentages of granules are even more penalizing than those obtained with the glycolysis technique.

As for the agglomeration of the ground with a binder, the prior art allows a high percentage of recovered materials to be obtained since the binder envelopes the granules and is able, in minimum quantity, to glue them in one piece. Currently, this process is used to recover ground waste of various types, including polyurethane.

The current technique consists of three steps:
- pressing into large moulds granules consisting of scraps of polyurethane products (from insulation or packaging light foams) formerly wetted with a binder; then, the binder is baked with heat or steam, which is made using a significant amount of time,
- the resulting block is then cut into flat or rolled sheets,
- the sheets can be die-cut, shaped or coupled with other materials.

The limitation of the current scrap agglomeration technique with a binder lies in the fact that the products obtained from these sheets can have very geometrically simple shapes, and in order to obtain them, the agglomeration block must always be first moulded. Known solution are disclosed, for example, by WO2004/052608 A1.

The need of solving the drawbacks and limitations mentioned with reference to the prior art is therefore felt.

Such a need is met by a moulding method according to claim 1.

### DESCRIPTION OF THE DRAWINGS

Further features and advantages of the present invention will appear more clearly from the following description of preferred non-limiting embodiments thereof, in which:

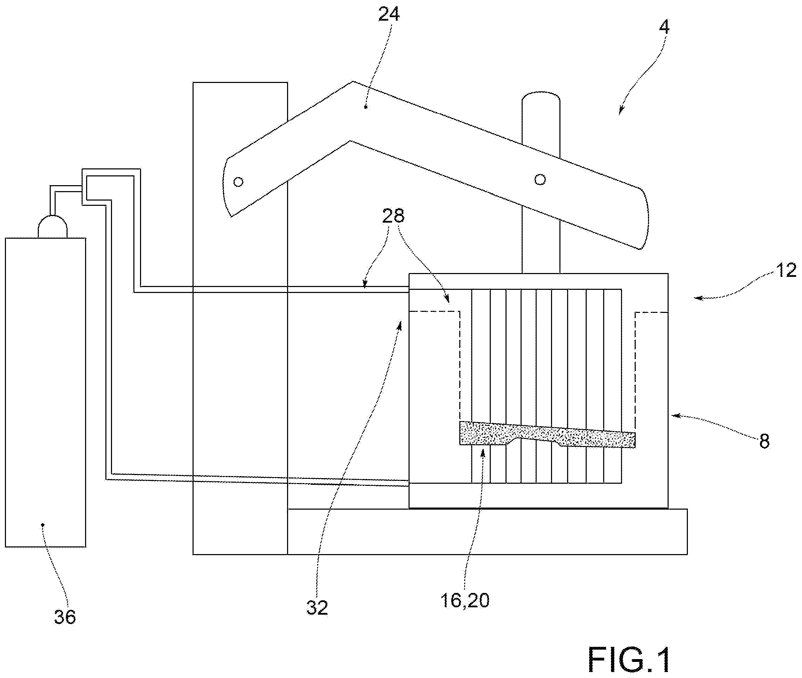

figure 1 shows a schematic view of a mould system for implementing the moulding method according to the present invention.

Elements or parts of elements in common between the embodiments described below are referred to with the same reference numerals.

### DETAILED DESCRIPTION

With reference to the above figures, reference numeral 4 globally indicates an overall schematic view of a mould for implementing the moulding method according to the present invention.

In the following description, explicit reference is made to a method for making a sole for footwear. However, the method can be extended to producing objects comparable in size to a sole to replace traditional materials where the properties of the agglomerate are sufficient, in particular in filling or containment uses. One can assume the production of a brick of such a shape that can be mechanically jointed with others identical ones, so as to form a larger structure that can be used as a weight, barrier or support. Therefore, in the following description, explicit reference will be made to an article such as a sole for footwear, without losing generality for the purposes of defining the scope of protection of the present invention.

Mould 4 comprises a body 8 and a cover 12 whch delimit, in closed configuration, a moulding chamber 16 which defines in negative the volume of product 20 to be moulded, in a known manner.

For example, mould 4 will be provided with handling means 24 of cover 12 and/or body 8, to allow the opening and closing thereof.

Mould 4 is provided with fluid inlet channels 28, typically steam (as best explained hereinafter) and one or more vent channels 32, fluidically connected to the moulding chamber 16 to allow the selective entry and expulsion of fluids, typically gas, in or from the moulding chamber 16.

Moreover, mould 4 may be provided with a steam generator 36 fluidically connected to mould 4, i.e. to the moulding chamber 16 by means of said fluid inlet channels 28.

The method of moulding an object in polyurethane, in particular a sole for footwear, according to the present invention, comprises the initial step of arranging polyurethane scraps in granular form.

Preferably, scraps are used which have an average particle size comprised between 4 and 7 mm, comprising extremes in the range 1-10mm, of granular-pseudo spherical shape. The use of scraps having needle-shaped particle size is also contemplated, such as in the case of burrs, with lengths between 2 and 20mm and thicknesses less than a millimetre.

The selection of the scrap type is not random but a step is provided to select polyurethane scraps having a breaking load greater than 10 kg/cm2, and a density greater than 130 g/L.

Preferably, the polyurethane scraps have a breaking load of 10-60 kg/cm2; such a load is for example comprised between 10-20 Kg/cm2 when using drain pre-casting.

Moreover, according to one embodiment, the polyurethane scraps have a density of between 400-600 g/L, for example in the case of using scrap soles; moreover, drain pre-casting for colour change with a density of between 150 and 350 g/L may also be used.

As regards the type of material to be selected, according to an embodiment the hardness of said polyurethane scraps is between 5-70 ShoreA. Even more preferably, the hardness of said polyurethane scraps is between 35-55 ShoreA, in the case of scrap soles.

It is also possible to use drain pre-casting for colour change having a hardness of between 5-35 ShoreA.

After having arranged the polyurethane scraps, suitably selected as described, said scraps are wetted with a polyurethane binding agent in order to obtain an agglomerate of scrap material and binding agent.

Preferably, the polyurethane binding agent is isocyanate, suitable to react chemically with the steam, leading to the formation of ureic groups that increase the molecular weight of the binding agent, as better described hereinafter.

The step that provides for wetting the granules in advance is useful to ensure that the granules do not touching each other directly but there is always a thin layer of binding agent between them. On the one hand, this facilitates the flow of the granules in the liquid phase of the agglomeration, and thus allows for a correct and complete filling of the moulding chamber 16 of mould 4. On the other, the same layer of binder, as a result of heat treatment, will solidify and will constitute the matrix that permanently and elastically incorporates the polyurethane granules.

The method provides for the step of inserting the agglomerate in said mould 4, in particular in the moulding chamber 16, so that the percentage by weight of the binding agent is at least equal to 10% of the total weight of the agglomerate inserted in mould 4 itself.

For example, in order to fill mould 4, cover 12 is at least partially displaced from body 8 by the handling means 24, so as to access the moulding chamber 16 and fill it with the agglomerate.

Preferably, mould 4, or better the moulding chamber 16 thereof, is filled so that the compression ratio between the polyurethane granules to be moulded and the agglomerate obtained by moulding is about 2:1/3:1.

Preferably, the final agglomerate density is between 200-600 g/L.

After filling the moulding chamber 16, mould 4 is closed and the agglomerate is baked with steam blown inside the moulding chamber 16 of mould 4.

The steam is preferably water vapour, blown through the fluid inlet channels 28 at a pressure of between 2 and 4 bars.

Preferably, the steam is injected at a temperature of between 100 and 150 °C.

Due to the action of the steam, an increase in the molecular weight of the binding agent and the incorporation of the scraps inside a binding agent matrix is obtained.

In particular, since the polyurethane binding agent is isocyanate, it is suitable to react chemically with the steam, leading to the formation of ureic groups that increase the molecular weight of the binding agent.

It is also possible to provide the step of equipping the mould with heating means (not shown) and heating the mould from the outside at the same time as baking the agglomerate with steam inside mould 4. This increases the heating or shortens the duration of heating and baking of the agglomerate.

For example, the baking time of the agglomerate inside the mould is 5-8 minutes.

At the end of the baking step, the cooling step of the mould and the extraction of the moulded part are carried out.

The cooling process can for example take place by by blowing of cold air.

The moulded part extracted from the moulding chamber 16 will have the shape and size of the latter and will be ready for use. In the case of a sole for footwear, it may for example be coupled to an upper.

As can be appreciated from the description, the present invention allows overcoming the drawbacks of the prior art.

In particular, the moulding method of the present invention allows:
either obtaining the finished piece with the desired shape in one step;
or reducing the baking time to a few minutes due to the small size of the mould;
or obtaining complex shapes due to the use of the final mould;
or using the ground scrap soles as a granule.

By virtue of the present invention it is possible to produce an article, and in particular a sole for footwear, starting from ground scrap and a binder that has a recycled content in the finished product higher than 75%, which is not possible with the prior art solutions.

Therefore, as seen, the present invention allows reaching concentrations higher than 75% of recycled material on the finished piece both with respect to glycolysis (with percentages lower than 50%) and to the agglomerate with polyurethane (with percentages lower than 25%). The use of mould vulcanisation allows ample design opportunities with respect to the use of blocks to be cut, and times compatible with a reasonable hypothesis of productivity.

A man skilled in the art may make several changes and adjustments to the moulding methods described above in order to meet specific and incidental needs, all falling within the scope of protection defined in the following claims.

## Claims

1. A method of moulding a sole for footwear, comprising the steps of:
- preparing polyurethane scraps, in granular form, said scraps having a breaking load greater than 10 kg/cm2, and a density greater than 130 g/l,
- wetting said scraps with a polyurethane binding agent in order to obtain an agglomerate of scrap material and binding agent,
- inserting the agglomerate in a mould (4), so that the percentage by weight of the binding agent is at least equal to 10% of the total weight of the agglomerate inserted in the mould (4),
- closing the mould (4) and baking the agglomerate with steam blown inside the mould (4), so as to obtain an increase in the molecular weight of the binding agent and the incorporation of the scraps inside a binding agent matrix,
- cooling the mould (4) and removing the moulded part.

2. Moulding method according to claim 1, wherein said polyurethane scraps have a breaking load of 10-60 kg/cm2.

3. Moulding method according to claim 1 or 2, wherein said polyurethane scraps have a density of between 400-600 g/l or of between 150-350 g/l.

4. Moulding method according to any one of the preceding claims, wherein the hardness of said polyurethane scrap is between 5-70 ShoreA.

5. Moulding method according to any of the claims from 1 to 4, wherein the hardness of said polyurethane scraps is between 35-55 ShoreA.

6. Moulding method according to any of the claims from 1 to 4, wherein the hardness of said polyurethane scraps is between 5-35 ShoreA.

7. Moulding method according to any one of the preceding claims, wherein the polyurethane binding agent is isocyanate, suitable to react chemically with the steam, leading to the formation of ureic groups that increase the molecular weight of the binding agent.

8. Moulding method according to any one of the preceding claims, in which the steam is blown in at a pressure of between 2 and 4 bars and at a temperature comprised between 100 and 150°C.

9. Moulding method according to any one of the preceding claims, wherein the baking time of the agglomerate inside the mould (4) is 5-8 minutes.

10. Moulding method according to any one of the preceding claims, wherein the mould (4) is filled so that the compression ratio between the polyurethane granules to be moulded and the agglomerate obtained by moulding is about 2:1/3:1.

11. Moulding method according to any one of the preceding claims, in which the final agglomerate density is between 200-600g/l.

12. Moulding method according to any one of the preceding claims, wherein the step of equipping the mould (4) with heating means and heating the mould (4) from the outside at the same time as baking the agglomerate with steam inside the mould (4), is provided for.

13. Moulding method according to any one of the preceding claims, wherein the average particle size is comprised between 4 and 7 mm, comprising extremes in the range 1-10mm, of granular-pseudo spherical shape.

14. Moulding method according to any one of the preceding claims, wherein the particle size is needleshaped with lengths between 2 and 20mm and thicknesses less than a millimetre.

15. A sole for footwear obtained by means of a moulding method according to any one of the preceding claims.

## Patentansprüche

1. Verfahren zum Formen einer Sohle für Fußbekleidung, umfassend die Schritte:
- Vorbereiten von Polyurethan-Resten, in Granulatform, wobei die Reste eine Bruchlast größer als 10 kg/cm² und eine Dichte größer als 130 g/l aufweisen,
- Benetzen der Reste mit einem Polyurethanbindemittel, um ein Agglomerat aus Restmaterial und Bindemittel zu erhalten,
- Einfügen des Agglomerats in eine Form (4), sodass der Gewichtsprozentsatz des Bindemittels mindestens gleich 10% des Gesamtgewichts des in die Form (4) eingefügten Agglomerats ist,
- Schließen der Form (4) und Backen des Agglomerats mit in die Form (4) geblasenem Dampf, um eine Erhöhung des Molekulargewichts des Bindemittels und die Aufnahme der Reste in eine Bindemittelmatrix zu erreichen,
- Kühlen der Form (4) und Entfernen des Formteils.

2. Formverfahren nach Anspruch 1, wobei die Polyurethanreste eine Bruchlast von 10-60 kg/cm² aufweisen.

3. Formverfahren nach Anspruch 1 oder 2, wobei die Polyurethanreste eine Dichte zwischen 400-600 g/l oder zwischen 150-350 g/l aufweisen.

4. Formverfahren nach einem der vorhergehenden Ansprüche, wobei der Härtegrad der Polyurethanreste zwischen 5-70 ShoreA liegt.

5. Formverfahren nach einem der Ansprüche von 1 bis 4, wobei der Härtegrad der Polyurethanreste zwischen 35-55 ShoreA liegt.

6. Formverfahren nach einem der Ansprüche von 1 bis 4, wobei der Härtegrad der Polyurethanreste zwischen 5-35 ShoreA liegt.

7. Formverfahren nach einem der vorhergehenden Ansprüche, wobei das Polyurethanbindemittel ein Isocyanat ist, geeignet, um mit dem Dampf chemisch zu reagieren, was zum Bilden von Harnstoffgruppen führt, was das Molekulargewicht des Bindemittels erhöht.

8. Formverfahren nach einem der vorhergehenden Ansprüche, in welchem der Dampf mit einem Druck zwischen 2 und 4 bar und mit einer Temperatur zwischen 100 und 150 °C eingeblasen wird.

9. Formverfahren nach einem der vorhergehenden Ansprüche, wobei die Backzeit des Agglomerats in der Form (4) 5-8 Minuten beträgt.

10. Formverfahren nach einem der vorhergehenden Ansprüche, wobei die Form (4) so befüllt wird, dass das Verdichtungsverhältnis zwischen dem zu formenden Polyurethangranulat und dem durch Formen erhaltenen Agglomerat 2:1/3:1 beträgt.

11. Formverfahren nach einem der vorhergehenden Ansprüche, in welchem die finale Agglomeratsdichte zwischen 200-600 g/l liegt.

12. Formverfahren nach einem der vorhergehenden Ansprüche, wobei der Schritt des Ausrüstens der Form (4) mit einem Wärmemittel und Erwärmen der Form (4) von außen zur gleichen Zeit bewirkt wird wie das Backen des Agglomerats mit Dampf in der Form (4).

13. Formverfahren nach einem der vorhergehenden Ansprüche, wobei die durchschnittliche Teilchengröße zwischen 4 und 7 mm beträgt, umfassend Extreme im Bereich von 1-10 mm, von granularer-pseudosphärischer Form.

14. Formverfahren nach einem der vorhergehenden Ansprüche, wobei die Teilchengröße nadelförmig mit Längen zwischen 2 und 20 mm und Dicken von weniger als einem Millimeter ist.

15. Sohle für Fußbekleidung, erhalten durch ein Formverfahren nach einem der vorhergehenden Ansprüche.

## Revendications

1. Procédé de moulage d'une semelle pour article chaussant, comprenant les étapes de :
- préparation de rebuts de polyuréthane, sous forme granulaire, lesdits rebuts ayant une charge de rupture supérieure à 10 kg/cm², et une masse volumique supérieure à 130 g/L,
- mouillage desdits rebuts avec un agent liant de polyuréthane afin d'obtenir un agglomérat de matériau de rebut et d'agent liant,
- insertion de l'agglomérat dans un moule (4), de sorte que le pourcentage en poids de l'agent liant soit au moins égal à 10 % du poids total de l'agglomérat inséré dans le moule (4),
- fermeture du moule (4) et cuisson de l'agglomérat avec de la vapeur soufflée à l'intérieur du moule (4), de façon à obtenir une augmentation du poids moléculaire de l'agent liant et l'incorporation des rebuts au sein d'une matrice d'agent liant,
- refroidissement du moule (4) et retrait de la pièce moulée.

2. Procédé de moulage selon la revendication 1, dans lequel lesdits rebuts de polyuréthane ont une charge de rupture de 10 à 60 kg/cm².

3. Procédé de moulage selon la revendication 1 ou 2, dans lequel lesdits rebuts de polyuréthane ont une masse volumique entre 400 et 600 g/L ou entre 150 et 350 g/L.

4. Procédé de moulage selon l'une quelconque des revendications précédentes, dans lequel la dureté dudit rebut de polyuréthane est comprise entre 5 et 70 ShoreA.

5. Procédé de moulage selon l'une quelconque des revendications 1 à 4, dans lequel la dureté desdits rebuts de polyuréthane est entre 35 et 55 ShoreA.

6. Procédé de moulage selon l'une quelconque des revendications 1 à 4, dans lequel la dureté desdits rebuts de polyuréthane est entre 5 et 35 ShoreA.

7. Procédé de moulage selon l'une quelconque des revendications précédentes, dans lequel l'agent liant de polyuréthane est l'isocyanate, approprié pour réagir chimiquement avec la vapeur, entraînant la formation de groupes uréiques qui augmentent le poids moléculaire de l'agent liant.

8. Procédé de moulage selon l'une quelconque des revendications précédentes, dans lequel la vapeur est soufflée à une pression entre 2 et 4 bars et à une température comprise entre 100 et 150 °C.

9. Procédé de moulage selon l'une quelconque des revendications précédentes, dans lequel la durée de cuisson de l'agglomérat à l'intérieur du moule (4) est de 5 à 8 minutes.

10. Procédé de moulage selon l'une quelconque des revendications précédentes, dans lequel le moule (4) est rempli de sorte que le rapport de compression entre les granules de polyuréthane à mouler et l'agglomérat obtenu par moulage soit d'environ 2:1/3:1.

11. Procédé de moulage selon l'une quelconque des revendications précédentes, dans lequel la masse volumique finale de l'agglomérat est entre 200 et 600 g/L.

12. Procédé de moulage selon l'une quelconque des revendications précédentes, dans lequel l'étape d'équipement du moule (4) avec un moyen de chauffage et de chauffage du moule (4) depuis l'extérieur en même temps que la cuisson de l'agglomérat avec de la vapeur à l'intérieur du moule (4), est prévue.

13. Procédé de moulage selon l'une quelconque des revendications précédentes, dans lequel la taille moyenne de particule est comprise entre 4 et 7 mm, comprenant des extrêmes dans la plage de 1 à 10 mm, de forme granulaire-pseudo sphérique.

14. Procédé de moulage selon l'une quelconque des revendications précédentes, dans lequel la taille de particule est en forme d'aiguille avec des longueurs entre 2 et 20 mm et des épaisseurs inférieures à un millimètre.

15. Semelle pour article chaussant obtenue au moyen d'un procédé de moulage selon l'une quelconque des revendications précédentes.
